Europäisches Patentamt

(19) European Patent Office

Office européen des brevets

(11) **EP 1 284 159 A2**

(12) **EUROPÄISCHE PATENTANMELDUNG**

(43) Veröffentlichungstag:
**19.02.2003 Patentblatt 2003/08**

(51) Int Cl.$^7$: **B01J 19/24**, B01J 19/32,
B01F 5/06, F01N 3/28

(21) Anmeldenummer: 02016379.6

(22) Anmeldetag: **26.07.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **08.08.2001 DE 10138970**

(71) Anmelder: **BAYER AG**
**51368 Leverkusen (DE)**

(72) Erfinder:
• **Jähn, Peter**
**51375 Leverkusen (DE)**
• **Ochmann, Klaus**
**51377 Leverkusen (DE)**

(54) **Rohrreaktor auf Basis eines Schichtstoffes**

(57) Es wird ein Rohrreaktor auf Basis eines Schichtstoffes beschrieben, wenigstens bestehend aus mindestens drei strukturierten Schichten (1, 2, 3) und je einer Deckschicht (4, 5) auf der Oberseite und Unterseite des Schichtstoffes, bei dem jede Schicht (1,2, 3) eine nebeneinander in Längsreihen angeordneter Öffnungen (6, 6'; 7, 7') aufweist, die insbesondere in Querrichtung zu den Längsreihen ausgedehnt sind, und bei dem sich die Öffnungen (6, 6') einer Schicht (1) mit mindestens drei Öffnungen (7, 7') einer jeweils benachbarten Schicht (2) überschneiden, und die Folgen von sich überschneidenden Öffnungen (6, 6'; 7, 7') einen Kanal (13) in Längsrichtung oder in Querrichtung der Schichten (1; 2; 3) bilden.

Figur 1a

EP 1 284 159 A2

**Beschreibung**

Die Erfindung betrifft einen Rohrreaktor auf Basis eines Schichtstoffes, bestehend wenigstens aus drei strukturierten Schichten und je einer Deckschicht auf der Oberseite und Unterseite des Schichtstoffes, bei dem jede Schicht eine Vielzahl von in Längsreihe angeordneter Öffnungen aufweist, und die Öffnungen in einer Hauptausdehnung insbesondere in Querrichtung zu der Längsreihe ausgedehnt sind und sich überschneidende Öffnungen in den Schichten einen durchströmbaren Kanal bilden.

Die vorliegende Erfindung betrifft insbesondere ein wirtschaftliches Verfahren zur Herstellung eines Rohrreaktors mit integrierten Mischkonturen und seine Verwendung für Reaktionsprozesse, die in großen Temperierbereichen von -80°C bis 500°C, sowie in Druckbereichen bis 500 bar durchgeführt werden. Die durchströmenden Stoffe können eine Viskosität bis zu 100 Pa·s besitzen.

Bekannt sind Reaktoren mit glatten Wandungen in Form von Rohren für große Stoffströme in Labor-, Technikums- und Produktionsanlagen. Diese Rohrreaktoren werden für Temperieraufgaben auch in doppelwandiger Ausführung hergestellt, so dass eine Wärmezufuhr und -abfuhr möglich ist. Bei Einsatz von wasserähnlichen Substanzen herrscht in der Regel eine turbulente Strömung, so dass eine Temperierung der Edukte unproblematisch ist. Werden viskose Stoffe mit einer Viskosität von größer 0,5 Pa·s durch Strömungskanäle bzw. Rohre gefördert, ist die Strömung gewöhnlich laminar und der Wärmeübergang zur temperierten Rohrwandung klein, so dass nur eine geringe Temperierleistung über die Kanalwandung erzielt werden kann. Zur Verbesserung des Wärmeübergangs müssen dann zusätzlich Statikmischer in die Strömungskanäle eingesetzt bzw. eingeschoben werden. Diese technische Maßnahme (siehe z.B. DE 4 236 039A1) verbessert den Temperiervorgang im Strömungsbereich und vergrößert geringfügig die Wärmeaustauschfläche. Dieses technische Vorgehen ist aufwendig und erhöht die Investitionskosten einer verfahrenstechnische Anlage überproportional, wenn eine Reaktion mit größerer Verweilzeit isotherm durchgeführt werden soll. Aus diesem Grunde sind derartige technische Lösungen, mit einem Verhältnis aus Kanal - Länge zum hydraulischen Durchmesser des Strömungskanals von L/D > 20 mit den bekannten Statikmischern unwirtschaftlich und werden in der Praxis selten realisiert.

Aus der Mikrostrukturtechnik (vergleiche Mikro - Struktursystem für Ingenieure, VCH Verlagsgesellschaft mbH; VDI-GVC, Jahrbuch 1997, Seite 102-116, VCH Verlagsgesellschaft mbH) sind Apparate bekannt, die aus Folien bestehen, die viele kleine parallel angeordnete Kanäle haben und in Paketen übereinander gelegt werden, um z.B. große Wärme - Austauschflächen bezogen auf das spezifische Apparatevolumen zu erzeugen. Die Strömungskanäle der Mikrostruktur-Apparate oder -systeme verlaufen quer bzw. längs zur Foliendicke. Das Einsatzgebiet der Mikrostruktur - Apparate beschränkt sich auf die Anwendung mit dünnflüssigen, wasserähnlichen und sehr niedrigviskosen Stoffen. Höherviskose Substanzen mit einer Viskosität von z.B. >1 Pa·s, erzeugen aufgrund der kleinen Strömungsquerschnitte extrem hohe Druckverluste, so dass diese Technik für höher viskose Stoffe nicht geeignet ist. Die Apparate besitzen sehr kleine Kanalquerschnitte, typischerweise bis etwa 100 µm, und werden aus dünnen Schichten oder Folien hergestellt, in denen offene Kanäle eingearbeitet werden, so dass die nächste anliegende Folie in einem Folienpaket jeweils den unteren offenen Kanal verschließt. Die Folien sind untereinander verschweißt und werden anschließend zusätzlich in ein Gehäuse gesetzt und schweißtechnisch verbunden. Die Strömungskanäle der bekannten Mikrostruktur-Apparate besitzen eine definierte Tiefe, die immer kleiner ist als die Foliendicke. Die Herstellungsverfahren für Mikrostruktur-Apparate (siehe z.B. VCH-Verlag: Mikrosystemtechnik für Ingenieure, BRD 1993, S. 261 bis 272) sind technisch sehr aufwendig und speziell für die Mikrostrukturtechnik entwickelt. Die speziellen spanabhebenden oder auch ätztechnischen Herstellungsverfahren ermöglichen nur kurze Kanallängen (bis 2 cm Länge), so dass bei Reaktionen mit laminaren Strömungsverhältnissen und längeren Reaktionszeiten diese Apparatetechnik nicht geeignet ist. Ein weiteres Problem der Mikrostruktur-Kanäle ist die Verstopfungsgefahr durch Verunreinigung der Substanzen.

Bekannt sind ebenfalls strukturierte Bleche, die umformtechnisch hergestellt und übereinander positioniert, verscheißt oder verlötet sind und zu sogenannten Wabenkörpern führen (DE 19 825 018A1). Diese durch Umformtechnik hergestellten Parallelkanäle werden bevorzugt als Katalysatorträger in der Abgastechnik eingesetzt.

Bekannt sind ferner Wärmeaustauscher (vergleiche z.B. WO 97/21064), die aus einer Vielzahl von Lochblechen bestehen und bei denen die Löcher oder Bohrungen hintereinander angeordnet sind und dadurch Strömungskanäle in Querrichtung der Bleche bilden. Die freie Strömungsfläche der Bohrungen wird axial an- und durchströmt, so dass die Apparate im Wesentlichen für Anwendungen mit einer extrem niedrigen Stoff-Viskosität (<50 mpa·s) geeignet sind.

Aus der Schrift WO 98/55812 sind ebenfalls Wärmetauscher mit Scharen von Kanälen bekannt, die in eine Platte eingearbeitet sind und deren Verlauf mäanderförmig ist, so dass schon etwas größere Verweilzeiten möglich sind. Die erzeugten Kanäle werden mit den schon erwähnten Herstellungsverfahren der Mikrostrukturtechnik in die Platten eingearbeitet. Diese Ausführungsform von Wärmeaustauschern ist nur für sehr dünnflüssige Substanzen geeignet und für eine rückvermischungsarme Reaktionsführung mit längeren Verweilzeiten ungeeignet. Zwischen den Kanälen gibt es keinen Stoffaustausch und keine Mischwirkung.

Deshalb liegt der Erfindung folgende Aufgabe zugrunde: es soll für einphasige oder mehrphasige Stoffsysteme mit endothermem und exothermem Charakter und mit langen Verweilzeiten, bei denen die Stoffe viskos sind oder während der Reaktion die Viskosität steigt, ein Rohrreaktor gefunden werden, welcher Stoffe mit insbesondere hoher Viskosität beim Durchströmen ständig vermischt. Der Rohrreaktor soll eine Mischwirkung beim Durchströmen erzeugen und eine große produktberührte Fläche besitzen, um schnelle Temperiervorgänge zu ermöglichen und den Stoffaustausch zu fördern. Der Rohrreaktor soll Vorgänge wie das Emulgieren und das Dispergieren auf einfache Weise ermöglichen. Lange Reaktionszeiten fordern lange Rohrreaktoren bzw. Strömungskanäle, d.h. Rohrreaktoren mit großem Längen-Durchmesser-Verhältnis von z.B. größer 20 bei gleichzeitig guter Temperiermöglichkeit. Der Rohrreaktor soll insbesondere rückvermischungsarm sein um Reaktionen bei hoher Selektivität durchführen zu können. Dazu ist insbesondere ein Einkanal-Prinzip wünschenswert. Die Strömungskanäle sollten einfach und preiswert herstellbar sein. Sie sollten vom Labor- Maßstab mit kleinen Stoffströmen im Bereich von typischerweise wenigen ml/Minute auf große Stoffströme für den Technikums- oder Produktionsbetrieb mit Durchflussmengen von mehreren Litern/Minute scale-up-fähig sein. Der Reaktor sollte gegebenenfalls für unterschiedliche Anwendungen in verschiedenen Werkstoffen und insbesondere als Katalysatorträger oder selbst aus einem Katalysatormaterial herstellbar sein. Der Rohrreaktor soll in einem großen Temperierbereich von -80°C bis 500°C und bei hohem Druck (bis 500 bar) einsetzbar sein. Des Weiteren soll mit dem Rohrreaktor in miniaturisierter Form eine kontinuierliche Versuchsdurchführung endothermer und exothermer Reaktionen möglich sein, weshalb eine Verknüpfung mit verschiedenen anderen verfahrenstechnischen Geräten oder Apparaten wünschenswert ist. Zu diesen in Kombination verschalteten Apparaten zählen Behälter, Pumpen, bekannte Statikmischer, besondere Emulgier- und Dispergiervorrichtungen und notwendige Messgeräte zur automatisierten Steuerung und Regelung der Prozesse. Für die Überwachung der Prozesse sind gegebenenfalls On-line-Analytikgeräte zu adaptieren, um den Prozessfortschritt zu verfolgen und gegebenenfalls durch die Prozessinformation zu steuern und zu lenken.

Die Aufgabe wird erfindungsgemäß gelöst durch einen Rohrreaktor, der Gegenstand der Erfindung ist, auf Basis eines Schichtstoffes, wenigstens bestehend aus mindestens drei strukturierten Schichten und je einer Deckschicht auf der Oberseite und Unterseite des strukturierten Schichtstoffes, bei dem jede strukturierte Schicht eine Vielzahl von Öffnungen aufweist, die in mindestens einer Längsreihe angeordnet sind und sich die Öffnungen einer mittleren Schicht mit mindestens drei Öffnungen einer jeweils benachbarten Schicht überschneiden, und dass die Folgen von sich überschneidenden Öffnungen einen Strömungskanal in Längsrichtung oder Querrichtung der Schichten bilden.

Die Öffnungen einer Schicht können auf beliebige Weise z.B. durch Bohren, Fräsen, Ätzen oder Stanzen erzeugt sein und haben bevorzugt untereinander innerhalb der einzelnen Schicht keine Verbindungen.

Der Reaktor basiert z. B. auf einzelnen dünnen Lamellen oder Schichten, die durch gleichartige längliche Öffnungen z.B. Stanzlöcher mit einem Winkel von 45° zur Längsreihe der Öffnungen strukturiert sind und wobei jeweils die darüber- und darunterliegende Schicht oder Lamelle um 180° gewendet angeordnet ist. Die Deckschichten verschließen die oberen und unteren Öffnungen. Hierbei wird ein Strömungskanal mit innenliegenden Konturen gebildet, der eine Mischwirkung auf den durchströmenden Stoff ausübt. Die erzeugten großen produktberührten Flächen im Innern des gebildeten Strömungskanals, verbessern den Stoff- und Wärmeaustausch wesentlich und zeigen beim Durchströmen insbesondere von viskosen Flüssigkeiten >1 Pa·s, ein sogenanntes Pfropfenströmungsprofil mit geringem Verweilzeitspektrum, was als rückvermischungsarm bezeichnet wird. Durch das einfache und wirtschaftliche Fertigungsverfahren zur Herstellung des Reaktors können insbesondere sehr lange Strömungskanäle kostengünstig realisiert werden. Beim Durchströmen von mehrphasigen Gemischen mit z.B. gasförmigen und oder flüssigen Komponenten begünstigen die innenliegenden Konturen einen Dispergier- oder Emulgiervorgang und verhindern eine Entmischung der Phasen. Ein besonderer Vorteil des Reaktors ist, dass er für unterschiedliche Prozessdurchführungen durch Anpassung der Schichtdicke und der Fläche der Öffnungen in allen Anwendungsbereichen, wie in der Mikro-, Miniatur- und in der Produktionstechnik zum Einsatz kommen kann. Für Anwendungen in der Mikrotechnik wird der Schichtstoff vorzugsweise aus Folien, die eine Dicke von wenigen μm besitzen, hergestellt. In der Produktionstechnik werden insbesondere Schichten aus Blechen eingesetzt, die mehrere mm dick sind.

Sind in einem Rohrreaktor die strukturierten Schichten mit mehreren Öffnungsreihen versehen, die einzelne nebeneinander angeordnete Kanäle bilden, so können durch Überschneidung benachbarter Öffnungen bei nebeneinander angeordneten Kanälen Querverbindungen zwischen den benachbarten Kanälen erzeugt werden. Dadurch kann ein Druckverlust am Rohrreaktor vermindert werden.

Bevorzugt ist der schichtenweise aufgebaute Rohrreaktor so gestaltet, dass die Öffnungen in den strukturierten Schichten periodisch wiederkehrend angeordnet sind.

Die Formgebung der Öffnungen ist grundsätzlich frei wählbar. Bevorzugt haben die Öffnungen die Form von Ellipsen, Schlitzen oder Rechtecken und ihre Tiefe entspricht der Blech- oder Schichtstärke. Die bevorzugt in länglicher geometrischer Form ausgebildeten Öffnungen (z.B. Langlöcher, Rechtecke oder flache Ellipsen) stehen mit ihrer Längsachse (Hauptausdehnung) unter einem Winkel $\alpha$ von 5° bis 85° und besonders bevorzugt unter einem Winkel $\alpha$ von 30° bis 60° zur Hauptströmungsrichtung, so dass eine Querströmung des durchströmenden Stoffes innerhalb einer Öffnung einer Schicht unterstützt wird.

Bevorzugt ist eine Ausführung des Reaktors, bei der die Öffnungen in der strukturierten Schicht so gestaffelt angeordnet sind, dass jeweils benachbarte Öffnungen in Längsrichtung der Reihe der Öffnungen gesehen, wenigstens mit einem Teil ihrer Ausdehnung nebeneinander angeordnet sind.

Das bedeutet, dass in einem Querschnitt durch den Schichtstoff senkrecht zur Hauptströmungsrichtung, die der Längsrichtung der Reihe von Öffnungen entspricht, in einer Schicht mindestens zwei Öffnungen nebeneinander sichtbar sind.

Dadurch können bei laminaren Strömungen Mischstrecken wesentlich verkürzt und der Stoff- und Wärmeaustausch intensiviert und generell das Mischen verbessert werden.

Zur Herstellung der Schichtstoffe werden beispielsweise gleichgestaltete oder gleichstrukturierte Bleche übereinander gelegt, wobei das obere Blech gegenüber dem jeweils benachbarten unteren Blech jeweils um 180° zur Längsachse (Längsreihe der Öffnungen) gewendet angeordnet ist. Diese Ausführung ist möglich, wenn die Längsreihen von Öffnungen beim Wenden direkt übereinander zu liegen kommen. Es überschneiden sich die Öffnungen der benachbarten Schichten, und es bildet sich ein Überschneidungsverhältnis, gebildet aus dem Verhältnis des Querschnitts der ganzen Öffnung zur Summe der überlagerten Teilöffnungsquerschnitte, welches insbesondere größer als 1,5 bis 10 ist.

Bevorzugt ist daher ein schichtenweise aufgebauter Strömungskanal dadurch gekennzeichnet, dass benachbarte Öffnungsreihen in den strukturierten Schichten ein Überschneidungsverhältnis der Öffnungen von größer 1,5 bis 10 aufweisen, besonders bevorzugt ist das Überschneidungsverhältnis 2,5 bis 7,5, so dass der horizontal zur Schichtenebene durchfließende Stoff an den inneren Wandflächen der Öffnungen geteilt und in die Öffnungen angrenzender Schichten umgelenkt wird, und die geteilten Stoffströme nach Passieren der zwischen den Öffnungen liegenden Stege in den Folgeöffnungen wieder vermischt und anschließend erneut geteilt werden.

Bevorzugt beträgt die Zahl der Öffnungen in einer strukturierten Schicht zur Bildung einer Reihe von Öffnungen mindestens 50, besonders bevorzugt mindestens 200, ganz besonders bevorzugt mindestens 500.

Ein aus strukturierten Schichten zusammengesetzter Rohrreaktor mit optimal gebildeten Strömungsquerschnitt ist insbesondere vorteilhaft, wenn die Länge der Öffnungsreihe (L) mit dem hydraulischen Maß des Durchmessers (D) des Strömungsquerschnittes ein L/D- Verhältnis von größer 10, bevorzugt größer 100 und besonders bevorzugt größer 500 bildet. Hierin entspricht der Durchmesser bezogen D auf einen kreisrunden Querschnitt, der mit der Breite B und Höhe H des rechteckigen Querschnittes entsprechend

$$D = \frac{\sqrt{4B \cdot H}}{\pi}$$

zusammenhängt. Daraus resultieren sehr lange Strömungskanäle mit kleinem Verweilzeitspektrum, bei denen durch die im Strömungsbereich stehenden Rippen der durchströmende Stoff intensiv vermischt wird. Es können in solch einem Reaktor endotherme oder exotherme Reaktionen mit temperaturempfindlichen Stoffen bei konstanter Prozesstemperatur im Innern des durchströmten Kanals durchgeführt werden. Insbesondere dann ist der Reaktor vorteilhaft anzuwenden, wenn die eingesetzten Substanzen höherviskos ($\eta > 100$ mPa·s) sind und sich die Viskosität des Stoffgemisches im Reaktor während der Reaktion erhöht.

Eine Schar von übereinander positionierten und sich berührenden strukturierten Blechen/Lamellen bilden ein Schichtenpaket mit mindestens einem Strömungskanal. Der Rohrreaktor kann wiederum, je nach Gestaltung und Zahl der Schichten, verschiedene Strömungs-Querschnittsformen wie Quadrat- oder Rechteckquerschnitte aufweisen. Für einen temperierten isothermen Reaktor ist ein flacher rechteckiger Strömungskanalquerschnitt mit großem temperierbaren Wandanteil zu bevorzugen. Daraus resultiert ein Strömungskanalquerschnitt mit einem geometrischen Seitenverhältnis Breite zur Höhe von B/H >1 im Querschnitt und bevorzugt ein Seitenverhältnis B/H >5 und besonders bevorzugt ein Seitenverhältnis B/H >10.

Unter Breite wird hier die Ausdehnung des Kanals in der Ebene einer Schicht verstanden. Die Höhe entspricht hier der Summe der Schichtdicken der einzelnen strukturierten Schichten.

Die Außenkontur der Öffnungen in den Schichten ist bevorzugt zickzackförmig oder gewellt um eine größere produktberührte Kontaktfläche dem durchströmenden Stoff anzubieten und dadurch den Stoffaustausch- und den Temperiervorgang zu verbessern.

Eine bevorzugte Bauform des schichtenweise aufgebauten Reaktors ist auf Basis eines zusammengesetzten Schichtenpaketes gebildet, wobei das Paket aus strukturierten Schichten in ein umschließendes Gehäuse geschoben oder gelegt wird, so dass das Gehäuse an der äußeren Kontur des Schichtenpaketes anliegt und die Deckschichten für diese Schichten bildet. Bei ausreichender Dichtigkeit zwischen dem Schichtenpaket zur inneren Fläche des umgebenden Gehäuses erfolgt keine Bypass-Strömung. Dem Anwender in Forschung und Entwicklung bietet sich dadurch die Möglichkeit eine Synthese oder einen kontinuierlich betriebenen verfahrenstechnischen Prozess zu optimieren. Ein einfacher Austausch unterschiedlich strukturierter Schichtpakete in dem Gehäuse ermöglicht Prozesse hinsichtlich Temperierleistung, Verweilzeitspektrum, Selektivität und Druckverlust zu optimieren.

Bevorzugt ist auch eine Variante des Reaktors, dadurch gekennzeichnet, dass dieser mindestens zwei Schichtstoffe mit mindestens drei strukturierten Schichten aufweist, die in Reihe hintereinander angeordnet sind, wobei die Schichten der beiden Schichtstoffe zueinander um einen Winkel β von 30 bis 60° verdreht angeordnet sind.

Es ist in einer besonderen Ausführung des Rohrreaktors möglich, mehrere Schichtenpakete mit strukturierten Schichten zu einem Stapel aufeinander aufzubauen. Hierbei sind die angrenzenden Schichtenpakete voneinander durch eine gemeinsame Decksicht oder mehrere Deckschichten getrennt.

Auf diese Weise bildet sich z.B. ein Gesamtpaket mit mehreren Strömungskanälen.

Technisch interessanter ist jedoch eine Ausführung, bei der mindestens zwei Schichtpakete strukturierter Schichten übereinander liegen, wobei die Frontseite des ersten Schichtpaketes als Einlass zum Strömungskanal ausgebildet ist. Die Rückseite dieses Schichtpaketes ist geschlossen. Die Deckschicht, die das erste Schichtpaket vom angrenzenden zweiten Schichtpaket trennt, weist am Ende der Reihe von Öffnungen einen Durchbruch zum zweiten Schichtenpaket auf, so dass eine Verbindung zum Kanal des zweiten Schichtpaketes besteht. Das zweite Schichtenpaket ist am selben Ende geschlossen wie das erste Schichtenpaket. Ein Fluid kann nun durch den Kanal des ersten Schichtenpaketes strömen, tritt dann durch den Durchbruch der Trennschicht in den Kanal des zweiten Schichtenpaketes und strömt in Gegenrichtung zum ersten Schichtpaket durch den Kanal des zweiten Paketes.

Man kann nun weitere Schichtpakete in gleicher Weise an das zweite Schichtpaket anschließen, wobei die offene Verbindung zwischen angrenzenden Schichtpaketen immer zwischen Front und Rückseite des Gesamtreaktors alternierend angebracht ist. Das jeweils letzte, d.h. oberste oder unterste Schichtpaket weist einen front- oder rückseitigen Auslass auf. In dieser Bauform wird erreicht dass die Schichtpakete vom Fluid mäanderförmig, d.h. in Längsrichtung und entgegen der Längsrichtung nacheinander durchströmt werden. Diese Ausführungsform ermöglicht kompakte und kleine temperierbare Reaktionsapparate mit großen produktberührten Flächen, die bevorzugt zum Stoffaustausch oder zur Kurzzeit - Temperierung eingesetzt werden können.

Für Prozesse mit großer Temperierleistung sind besonders lange schichtenweise aufgebaute Strömungskanäle sinnvoll. Es bietet sich alternativ zur oben beschriebenen Bauform die Verwendung von größeren Blechtafeln als strukturierte Schichten an, in denen die Öffnungsreihen schlangenförmig eingearbeitet sind. Mehrere strukturierte Blechtafeln werden hierbei wie die strukturierten Einzellamellen übereinander zu einem Paket gestapelt. Jeweils zwei gerade parallele Längsreihen von Öffnungen, die z.B. in eine Blechtafel eingearbeitet sind werden hierbei über eine Reihe von Öffnungen an ihren Enden miteinander verbunden, wobei diese Endreihen in einem Halbkreis angeordnet sind oder eine gerade Querverbindung bilden. Durch Verbinden mindestens dreier solcher Tafeln entsteht im einfachsten Fall ein Schichtpaket bei dem jeder durch übereinander liegende versetzte Öffnungen gebildete Kanal mit einem angrenzenden Kanal an seinem Ende quer verbunden ist. Die Position des Einlasses und des Auslasses eines solchen Tafelpaketes ist grundsätzlich je nach Geometrie der Tafeln wiederum frei wählbar. Insbesondere können mehrere Blechtafelpakete strömungstechnisch hintereinander verschaltet werden, so dass Kanäle mit sehr großem L/D- Verhältnis und großer Temperierleistung konzipiert werden können. Die strukturierten Einzelbleche der Pakete werden z. B. miteinander verlötet, so dass geschlossene Strömungskanäle entstehen die auch unter hohem Druck, z.B. bis 500 bar, betrieben werden können.

Die erfindungsgemäßen Rohrreaktoren können beidseitig der Deckschichten direkt mit flächigen Temperiereinheiten verbunden sein. Es können aber auch Temperiereinheiten lösbar angeschlossen werden. Eine Temperierung des Rohrreaktors ist möglich unter Verwendung von angeschlossenen Hohlkörpern, die von Wärmeträger-Flüssigkeiten durchströmt werden, durch elektrische Heizungseinrichtungen oder durch die Anbringung von Peltier-Elementen zur Kühlung oder Heizung.

Reaktoren, die wie oben dargestellt aus großflächigen Blechen oder Folien aufgebaut sind, können in einer bevorzugten Variante mit verzweigenden oder zusammenführenden Kanälen ausgestattet werden. So werden beispielsweise in einem Schichtstoff mehrere unabhängige zuführende Strömungskanäle mit gleichem oder unterschiedlichem Strömungsquerschnitt durch mehrere Öffnungsreihen gebildet, die an einer Verzweigungsstelle in einen gemeinsamen sammelnden Hauptströmungskanal münden, der wiederum einen größeren Strömungsquerschnitt hat, als die einzelnen vorgeschalteten Kanäle. Durch diese Anordnung von Kanälen in einem Schichtstoff können z. B. mehrere Substanzströme zunächst unabhängig von einander temperiert werden, so dass erst beim Zusammentreffen der temperierten Teilströme in den sammelnden Hauptströmungskanal eine Reaktion beginnt.

Ein bevorzugter Reaktor ist in einer weiteren Ausführungsform folglich dadurch gekennzeichnet, dass er mindestens zwei Strömungskanäle mit gleichen oder unterschiedlich großen hydraulischen Abmessungen aufweist, die in einem gemeinsamen Reaktionskanal übergehen. Das ermöglicht ein getrenntes Vortemperieren zweier Stoffe, die nach dem Verlassen der Temperierstrecke in einen gemeinsamen Reaktionskanal mit größerem hydraulischen Kanalquerschnitt münden und dort miteinander unter ständigem Mischen reagieren. Für die unterschiedliche Temperierung bieten sich insbesondere Peltier-Elemente an, die einfach an gewünschter Stelle positioniert werden können. Es ist gleichfalls möglich an einer Verzweigungsstelle einen Hauptströmungskanal in zwei Kanäle aufzuteilen.

Eine weitere besondere Ausführung des Rohrreaktors zeigt in der oberen und/oder der unteren Deckschicht mindestens eine Öffnung für die Stoff-Zuleitung und/oder Stoff-Ableitung, so dass z.B. ein gasförmiger oder flüssiger Stoff die Deckschicht passieren und in den Strömungskanal des Reaktors eingeleitet oder dass Reaktionsgemisch ausgeschleust werden kann.

Eine besonders bevorzugte Ausführungsform des Rohrreaktors ermöglicht die Zuleitung eines flüssigen und/ oder gasförmigen Stoffes entlang des Strömungskanals des Schichtstoffes durch die Anbringung einer porösen Deckschicht oder Ausgestaltung der Deckschicht als durchlässige Membran.

Die poröse Deckschicht erlaubt eine ständige Zuführung mindestens eines Stoffes in den von einem anderen Stoff durchströmten, Rohrreaktor, wobei der durchströmende Stoff z.B. im Innern des Schichtenpaketes eine chemische Reaktion mit dem zugeführten Stoff eingeht.

Es werden in dem Rohrreaktor auf diese Weise zugeführte gasförmige und oder flüssige Stoffe sofort nach dem Passieren der porösen Deckschicht mit dem Hauptstrom im Strömungskanal des Reaktors intensiv vermischt, emulgiert oder dispergiert, was zu einer Verbesserung des Stoffaustausches und zum schnellen Abreagieren des zugeführten Stoffes führt. Dadurch kann sich die Raum- Zeit- Ausbeute sowie die Selektivität einer Synthese erhöhen. Die Deckschicht kann auch insbesondere eine Membran sein, die für den einzubringenden oder gegebenenfalls auszutragenden Stoff nur in eine Richtung durchlässig ist. In einer besonders bevorzugten Ausführungsform sind die porösen Deckschichten nur in Segmenten oder Teilabschnitten des langen schichtenweise aufgebauten Strömungskanals angebracht.

Ein ökonomisches Herstellungsverfahren des Reaktors besteht darin, die strukturierten Schichten des Reaktors miteinander zu verlöten. Bei dieser Ausführung werden z.B. dünne Lötfolien passend zur strukturierten Einzelschicht gefertigt, so dass das strukturierte Blech und die strukturierte Lötfolie unlösbar durch einen Lötprozess miteinander verbunden werden. Das Verlöten aller Kontaktflächen der strukturierten Schichten mit den Deckschichten führt zu Strömungskanälen, die mit hohem Druck, bis 500 bar betrieben werden können. Die strukturierten Schichten und die zugehörenden Deckschichten können an ihrer nicht strukturierten Längskante, alternativ mit Hilfe von Laser - bzw. Elektronen - Strahl - Schweißung dicht mit einander verbunden werden.

Weiterer Gegenstand der Erfindung ist die Verwendung des Rohrreaktors zur Durchführung chemischer Reaktionen und zur Stoffaustauschtechnik, insbesondere als Kolonnenpackung, in der Extraktion und in der thermischen Trenntechnik.

Eine geometrisch anders aufgebaute Variante des Rohrreaktors ist auch Gegenstand der Erfindung. Dieser Rohrreaktor ist auf Basis eines Schichtstoffes aufgebaut, der aus wenigstens zwei strukturierten Schichten besteht, die um ein Kernrohr oder Kernstab gewickelt angeordnet sind, wobei jede Schicht eine Vielzahl in einer oder mehreren Längsreihen angeordneter Öffnungen aufweist, die insbesondere in Querrichtung zu den Reihen ausgedehnt sind, und einer Deckschicht, die auf dem äußeren Umfang des Schichtstoffes angeordnet ist, und bei der sich die Öffnungen einer Schicht mit den Öffnungen der jeweils angrenzenden Schicht überschneiden, wobei die Folgen von sich überschneidenden Öffnungen Kanäle in Längsrichtung des Kernrohres oder Kernstabes ausbilden.

Werden die zu wickelnden strukturierten Schichten mit parallel angeordneten Öffnungsreihen einseitig durch einen nicht strukturierten Bereich verlängert, so kann der nicht strukturierte Bereich der Schicht die Deckschicht dieses Reaktors bilden. Der nicht strukturierte Bereich ist in Folge ebenfalls spiralförmig weiter um den Reaktor gewickelt, so dass das Ende der Schicht mit sich selber, entlang der Längsachse der korrespondierenden Achse des runden Kerns verschweißt wird. Der spiralförmige gebildete konzentrische Schichtstoff ist so zur Umgebung hin verschlossen und druckdicht.

Die Anströmung des Reaktors mit gewickelten Schichten erfolgt stirnseitig oder sie kann über radial zuführende spezielle Öffnungen in der Deckschicht erfolgen.

Ein Reaktor mit gewickelten strukturierten Schichten kann verschiedene Funktionen erfüllen, wenn die Einzelschicht in verschiedene strukturierte und nicht strukturierte Bereiche aufgeteilt ist. So kann ein bevorzugter Reaktor einen temperierbaren konzentrischen Mischkanal mit einer umschließenden porösen Deckschicht aufweisen, die von einem konzentrischen zuführenden Hohlraum und einem dem Hohlraum umgebenden druckdichten Außenmantel umschlossen ist. Diese Variante wird durch die genannte Wickeltechnik gebildet. Sind diese segmentförmig strukturierten Schichten mit einem Lot an den zu erwarteten Kontaktflächen beschichtet, können die spiralförmig aufgewickelten Schichten miteinander verlötet werden, um einen druckdichten Apparat zu erhalten.

Ein annähernd konzentrischer Rohrreaktor kann alternativ mit mehreren Paaren von um den Kernstab/-rohr gewickelten angeordneten strukturierten Schichten aufgebaut werden, insbesondere dann wenn die Seitenkanten der Schichtenpaare um einen Winkel γ von 0 bis kleiner 180° auf dem Umfang des Kernstabes versetzt angeordnet sind und gemeinsam um den Kernstab gewickelt werden.

Die strukturierten Schichten für den Rohrreaktor in geraden Schichten können aus unterschiedlichen metallischen oder nicht metallischen Werkstoffen hergestellt sein. Die Schichtdicke der Schichten beträgt insbesondere 10 μm bis 10 mm.

Insbesondere sind die Schichten aus einem Werkstoff ausgewählt aus der Reihe Metall, insbesondere Aluminium oder Stahl, Kunststoff, Glas oder Keramik. Des Weiteren besteht die Möglichkeit die strukturierten Schichten als Katalysatorträger zu nutzen, oder direkt aus einem Katalysator- Material herzustellen. Die einzelnen Schichten können auch aus unterschiedlichem Material bestehen.

Für den um einen Kernstab/-rohr aufgebauten Reaktor kommen ebenfalls Metall oder Kunststoff als Werkstoffe in Frage. Besonders bevorzugt ist auch ein Rohrreaktor mit Kernstab oder -rohr, der dadurch gekennzeichnet ist, dass die Schichten an ihrer produktberührten Fläche mit einem katalytisch wirkenden Stoff, wie z.B. Rhodium, Gold, Silber oder Nickel beschichtet sind oder ganz aus diesen Katalysatormaterial hergestellt sind. Vorzugsweise wird ein solcher Reaktor in der Reaktions- und Abgastechnik eingesetzt werden.

In besonderen Fällen können die erfindungsgemäßen Reaktoren mit im Prinzip bekannten Mikrostrukturapparaten oder -systemen, mit bekannten Statikmischern und mit anderen verfahrenstechnischen Apparaten kombiniert werden.

Die erfindungsgemäßen Rohrreaktoren können zur Durchführung von Temperieraufgaben und für isotherm geführte Reaktionen eingesetzt werden. Sie haben den Vorteil, dass aufgrund der großen produktberührten Kontaktflächen der Stoffaustausch und Wärmeaustausch beim Durchströmen der Kanäle wesentlich intensiviert werden kann, im Vergleich zum einfachen Strömungskanal (glattes Rohr). Das führt bei vielen chemischen Reaktionen zu einer höheren Selektivität und zu einer höheren Raum-/Zeit- Ausbeute. Der Rohrreaktor kann insbesondere in einer Einkanalausführung schon im Labormaßstab zum Einsatz kommen, um eine Prozess-Intensivierung schon bei Sreening-Versuchen zu ermöglichen. Wirtschaftliche Aspekte hinsichtlich reaktionskinetischer Eigenschaften von Synthesen können in einer kontinuierlichen Fahrweise schon im miniaturisierten Labor-Maßstab verfolgt werden. Insbesondere exotherme Reaktionen mit langer Verweilzeit können isotherm durchgeführt werden, da die Rohrreaktoren mit einem sehr großen L/D-Verhältnis höchst wirtschaftlich gefertigt werden können. Eine Übertragung aus einer Laboranwendung in eine Technikums- oder Produktionsgröße ist möglich, in dem die Öffnungen des Schichtstoffes vergrößert und dadurch auf die größeren Durchflussströme angepasst werden. Des weiteren ist eine Übertragung auf Produktionsverhältnisse möglich, in dem die Geometrie des Schichtstoffes konstant gehalten wird und Öffnungsreihen vielfach in einer Schicht parallelisiert werden. Die Strömungskanäle des Schichtstoffes besitzen ein kleines Hold-up, so dass das Verweilzeitspektrum eng ist, das begünstigt Anwendungen mit temperaturempfindlichen Stoffen. Aus diesem Grunde sind Einsatzgebiete des Rohrreaktors die Herstellung von Polymeren und biotechnologische und pharmazeutische Herstellungsverfahren. Die insbesondere quer zur Hauptströmungsrichtung liegenden Stege im Strömungsbereich zwischen den Öffnungen einer Reihe in einer Schicht reduzieren das Leervolumen des Strömungskanals erheblich, so dass keine Temperaturschädigung der durchströmenden Stoffe auftritt. Die Kanäle können, wie beschrieben, mit kleinem und sehr großen L/D-Verhältnis hergestellt werden. Es bietet sich des weiteren an den Rohrreaktor als miniaturisierten Wärmeaustauscher einzusetzen.

Die durch den Schichtenaufbau entstehenden großen Kontaktflächen ermöglichen einen wirtschaftlichen Einsatz bei Stoffaustauschvorgängen, wie zum Beispiel bei thermischen Trennverfahren.

Bestehen die Schichten aus einem Katalysatorwerkstoff, oder sind mit einem Katalysator beschichtet erweitert sich der Anwendungsbereich auf die Abgastechnik, zur Reinigung bzw. zur Spaltung von Abgasstoffen, z. B. beim Abgaskatalysator eines PKWs. Aufgrund des einfachen Schichtenaufbaues des Rohrreaktors ist eine Serienfertigung der Einzelschichten durch Ätzen, Lasern oder Stanzen möglich, was zu erheblichen Kostenreduzierungen führt. Eine technische Auslegung hinsichtlich hoher Druckgradienten ist möglich, wenn die Schichtenstärke und Öffnungsabstände der Öffnungen entsprechend dimensioniert sind. Werden die strukturierten Schichten und die Deckschichten untereinander verlötet, kann auf ein teures drucktragendes Gehäuse verzichtet werden, was die Apparatekosten verkleinert. Insbesondere vorteilhaft gegenüber der Mikrostruktur-Technik ist die Unempfindlichkeit der Rohrreaktoren gegen Verstopfung, so dass auf zusätzlich feine Vorfilter für Fluide und Gase verzichtet werden kann. Die Schichtentechnik der Rohrreaktoren kann sehr einfach in die Mikrosystemtechnik überführt werden, wenn sehr dünne Folien als Schicht eingesetzt werden, d.h. solche mit einer Dicke von kleiner als 200 μm.

Je nach verfahrenstechnischer und chemischer Aufgabenstellung sind Kombinationen des erfindungsgemäßen Gegenstandes mit vor- und/oder nachgeschalteten Behältern, Pumpen, Dispergier-Vorrichtungen und bekannten Statikmischer-Systemen sinnvoll. Zu diesen Kombinationen zählen auch prozessbedingte Sensoren und Aktoren und Online-Analyse-Vorrichtungen zur Prozessführung.

Die Erfindung wird nachfolgend anhand der Figuren durch die Beispiele, welche jedoch keine Beschränkung der Erfindung darstellen, näher erläutert.

Es zeigen:

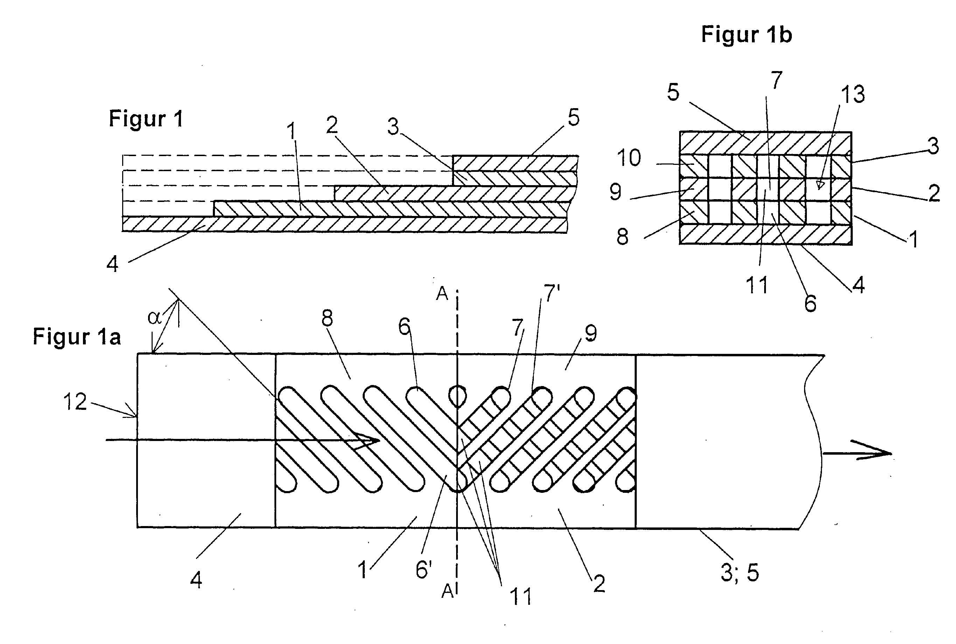

Figur 1, 1a, 1b      den Aufbau eines Rohrreaktors auf Basis eines Schichtstoffes mit drei strukturierten Schichten und einer oberen und unteren Deckschicht. Der Aufbau des Rohrreaktors ist in Figur 1a geöffnet dargestellt, so dass die Schichtebenen mit den länglichen Öffnungen und den Überschneidungsbereichen der Öffnungen zu erkennen sind. Die Figur 1b ist eine Schnittdarstellung aus Fig. 1a, sie zeigt den Strömungskanal des Reaktors.

| Figur 2 | ein herausgeschnittenes Segment eines Rohrreaktors nach Fig. 1 ohne obere Deckschicht. Zu erkennen sind Stege, zwischen den unter dem Winkel $\alpha$ stehenden Öffnungen, die eine Mischwirkung verursachen. |
|---|---|
| Figuren 3, 3a, 3i | bevorzugte längliche geometrische Formen von Öffnungen in zwei übereinander liegenden Schichten, wobei die Öffnungen unter einem Winkel $\alpha$ zur Strömungsrichtung geneigt sind und Überschneidungsbereiche sichtbar werden. |
| Figur 3b - 3h | verschiedene Querschnittsformen von Öffnungen. |
| Figur 4, 4a | ein temperierbares Gehäuse in dem zwei Schichtstoffe eingeschoben sind und die zwei Schichtstoffe mit einer verkürzten Deckschicht von einander getrennt sind, so dass sie nacheinander durchströmt werden. Fig. 4a ist eine Schnittdarstellung des aufnehmenden Gehäuses der zwei Schichtstoffe gemäß Linie A-A in Figur 4. |
| Figur 5 | einen Schichtstoff mit poröser Deckschicht parallel zum Schichtstoff und umgeben von einem druckdichten Gehäuse mit zuführenden Leitungen und Hohlräumen. |
| Figur 6 | zwei übereinander gelegte Schichten mit parallel angeordneten Öffnungsreihen, wobei die Anzahl der parallelen Öffnungsreihen eine Länge aufweisen, die dem mehrfachen Umfang eines runden Kerns oder Rohres entspricht und seitlich zu den parallelen Öffnungsreihen ein nicht strukturierter Bereich sich anschließt, der eine Breite von ebenfalls mindestens den zweifachen Umfang des Kerns hat. |
| Figur 6a | einen Schnitt durch einen Rohrreaktor, in dem zwei Schichten nach Fig. 6, spiralförmig an einem runden Rohr befestigt sind und spiralförmig eng gewickelt sind bis die Schichten einen konzentrischen Strömungskanal ausbilden und einen den Kanal umgebenden Mantel. Zwei Paar dünner Schichten sind versetzt um den Winkel $\gamma$, gleichzeitig um den Kern gewickelt. |
| Figur 6b | einen schematischen Querschnitt durch einen Rohrreaktor mit annähernd konzentrischem Strömungskanal. |
| Figur 6c | ein Detail aus Fig. 6b zur Position der Lötstelle an der Deckschicht. |
| Figur 6d | einen Abschnitt des Reaktors nach Fig. 6b im Längsschnitt. |
| Figur 6e | einen schematischen Querschnitt zur Erläuterung der Wickeltechnik. |
| Figur 7 | eine besondere Ausführungsform eines annährend konzentrischen Rohrreaktors auf Basis eines spiralförmig gewickelten Schichtstoffes, wobei der konzentrische Strömungskanal von einer porösen Deckschicht und die wiederum von einem verteilenden zuführenden Druckraum umgeben ist, der druckdicht verschlossen ist. |
| Figur 7a | zwei übereinanderliegende strukturierte Folien zur Herstellung des Reaktors nach Fig. 7. |
| Figur 7b | einen Abschnitt des Reaktors nach Fig. 7 im Längsschnitt gesehen. |
| Figur 8 | einen Rohrreaktor, gebildet aus großen Blechtafeln, die eine schlangenförmig verlaufenden Öffnungsreihe zeigen. |
| Figur 9 | einen Rohrreaktor für eine verfahrenstechnischen Prozess, bei dem drei getrennte und unterschiedliche Strömungskanäle mit einem sammelnden Hauptkanal verbunden sind. |
| Figur 10 | die Hintereinanderschaltung zweier Rohrreaktoren ohne Deckschicht, die in der gedachten Achse der Hauptströmungsrichtung um den Winkel $\beta$ verdreht angeordnet sind. |

**Beispiele**

**Beispiel 1**

Fig. 1 zeigt den prinzipiellen Aufbau eines Rohrreaktors in Seitenansicht auf Basis eines Schichtstoffes, wobei strukturierte Schichten 1,2,3 und Deckschichten 4,5 angeschnitten dargestellt sind. Die vollständige Kontur der Schnittdarstellung des Schichtstoffes ist durch eine ergänzende gestrichelte Linie dargestellt.

Fig. 1a zeigt den teilweise aufgeschnittenen Reaktor aus Figur 1 von oben. Zu erkennen sind die untere Deckschicht 4 und zwei strukturierte Schichten 1, 2 von 0,2 mm Dicke aus Edelstahl, wobei die strukturierte Schicht 3 verdeckt unter der Deckschicht 5 liegt. Die strukturierte Schicht 1 zeigt eine Reihe von gleichartigen Öffnungen (Langlöcher) 6, die unter einem Winkel $\alpha$ von 45° zur Hauptströmungsrichtung (Pfeil) geneigt sind. Die strukturierte Schicht 2 ist wie Schicht 1 gefertigt aber um 180° gewendet auf die Schicht 1 gelegt, so dass die Öffnungen 7, einen Winkel $\alpha$ von -45° zeigen und mit den jeweils angrenzenden Öffnungen 6 einen Überschneidungsbereich 11 bilden. Die strukturierten Schichten 1,2 und die verdeckte Schicht 3 haben eine geschlossenen Randbereich 8, 9. Der Reaktor ist an der Frontseite 12 und an seiner Rückseite offen.

Die Figur 1b zeigt die Schnittdarstellung entsprechend Linie A-A aus Fig. 1a. Zu erkennen sind die strukturierten Schichten 1, 2, 3 und die obere Deckschicht 5 und die untere Deckschicht 4. Im Schichtaufbau sind deutlich die Öffnungen der strukturierten Schichten zu erkennen, die übereinander gelagert sind und Überschneidungsbereiche 11 bilden. Seitlich sind die geschlossenen Randbereiche 8, 9, 10 zu erkennen, die verschweißt sind um einen druckdichten Strömungskanal 13 zu bilden.

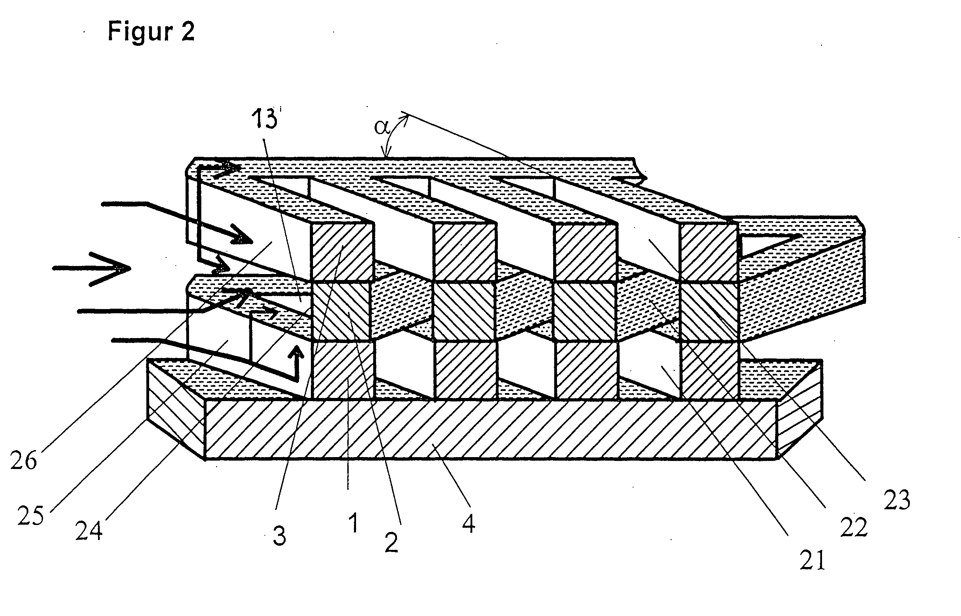

Fig. 2 zeigt einen perspektivischen Ausschnitt eines Rohrreaktors ähnlich Fig. 1 mit Strömungskanal 13 auf Basis eines Schichtstoffes mit den durch Öffnungen strukturierten sich berührenden Schichten 1, 2, 3 und der unteren Deckschicht 4. Es ist zu erkennen, dass die Öffnungen 21, 22, 23 in den Schichten sich teilweise überschneiden und die Stege 24, 25, 26 zwischen den Öffnungen unter dem Winkel $\alpha$ stehen der eine Querströmung unterstützt, so dass Überschneidungsbereiche und quer stehende Stege für eine gute Mischwirkung beim Durchströmen eines Stoffes durch den Kanal 13 sorgen.

**Beispiel 2**

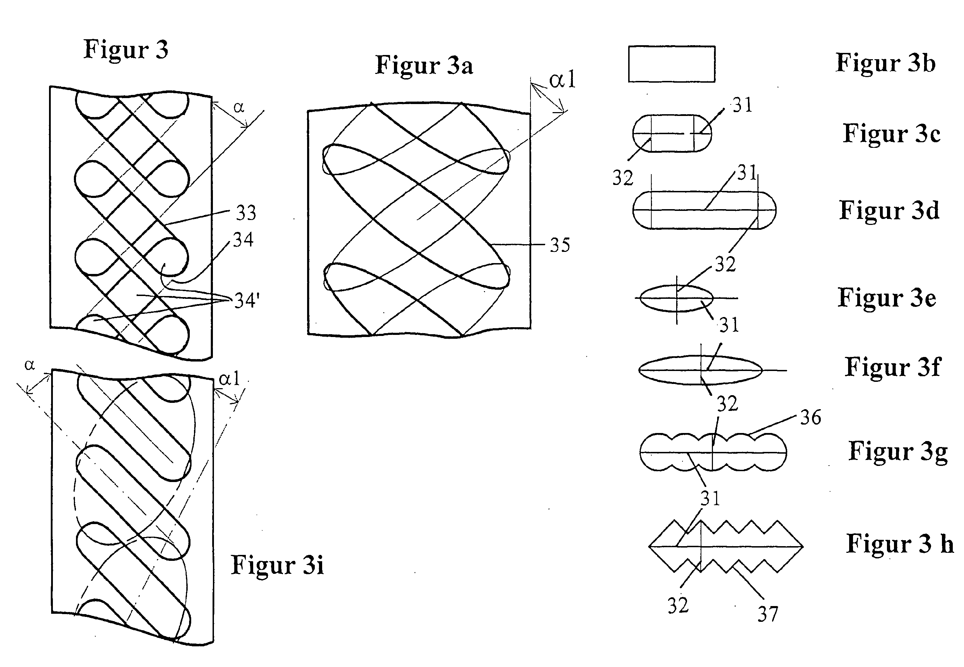

Fig. 3 zeigt zwei über einander gelegte Schichten für einen Rohrreaktor mit in Reihe angeordneten Öffnungen 33 (Fig. 3d), die in ihrer Querachse 31 ausgedehnt sind und bei denen das geometrische Verhältnis von Öffnungsbreite 31 zur Öffnungshöhe (32) >1 ist. Die Querschnittsform 33 entspricht der Kontur eines Langloches (Fig. 3d), wobei die Öffnungen zur Durchströmungsrichtung mit dem Winkel $\alpha$ geneigt sind. Zu erkennen sind z.B. drei Überschneidungsbereiche 34' der gleichartigen Öffnungen 33, 34 in den beiden Schichten. Im Rohrreaktor sind wenigstens eine weitere Schicht, die mit der untersten identisch ist sowie zwei Deckschichten vorgesehen.

Die Schichten nach Fig. 3a sind ähnlich wie Fig.3 aufgebaut, jedoch mit einer eliptischen Form 35 der Öffnung in Analogie zur Figur 3f.

In Fig. 3b - 3h sind weitere längliche Öffnungsformen dargestellt, wobei aus Strömungssicht die Hauptausdehnung 31 immer größer ist als die Ausdehnung in Querrichtung 32. Des weiteren sind Öffnungsquerschnitte gezeigt mit einer gebrochenen Innenkontur 36 (Fig.3g) oder zickzackförmigen Innenkontur 37 (Fig. 3h).

Figur 3i zeigt eine Kombination von zwei übereinander liegenden Schichten unterschiedlich geformter Öffnungen bei gleichzeitig unterschiedlichem Winkel $\alpha$, $\alpha^1$ zur Hauptströmungsrichtung.

**Beispiel 3**

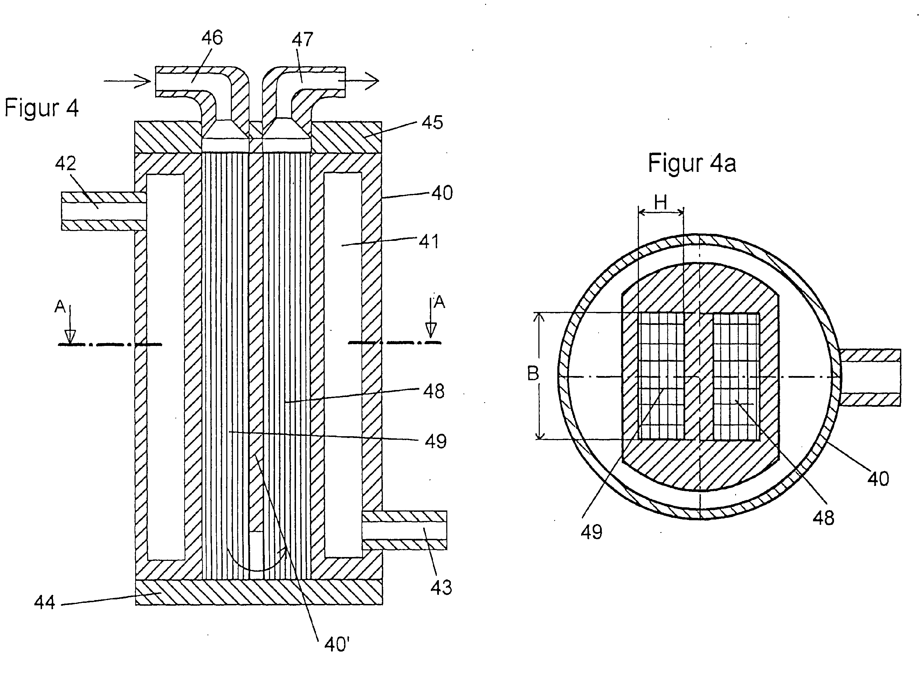

In Figur 4 wird ein Gehäuse 40 für einen Rohrreaktor mit konzentrischem Temperierraum 41 sowie einer Zuführleitung 42 und einer Abführleitung 43 für das Temperiermedium gezeigt. Das Gehäuse hat zusätzlich einen abschließenden Deckel 44 und einen weiteren Deckel 45 der eine Stoff-Zuleitung 46 und eine Stoff-Ableitung 47 hat. Die Deckel sind mit dem Gehäuse 40 mittels nicht dargestellter Schrauben verbunden. Das Gehäuse 40 besitzt im Zentrum zwei Hohlräume, in die zwei strukturierte Schichtpakete 48, 49 eingeschoben sind. Die beiden Schichtpakete 48, 49 sind durch einen mittigen Steg 40' voneinander getrennt, wobei der trennende Steg 40', als Teil des Gehäuses, etwas kürzer ist als das eingeschobene strukturierte Schichtpaket selbst, und dadurch eine sequentielle Stoffdurchströmung der Schichtstoffe ermöglicht wird. Der Steg 40' bildet eine gemeinsame Deckschicht für die angrenzenden Schichtpakete 48, 49. Die Schichtpakete 48, 49 sind aus neun aufeinander gestapelten strukturierten Blechen, ähnlich denen aus Figur 1 aufgebaut, die mit einander verlötet sind. Die Reaktionsedukte treten am Einlass 46 ein, durchlaufen den Strömungskanal des Paketes 49, treten in das Paket 48 über, durchlaufen dieses und treten am Auslass 47 wieder aus.

In Figur 4a ist das Gehäuse 40 im Schnitt gemäß A-A von Fig. 4 dargestellt, so dass die zwei eingeschobenen Schichtstoffe 48, 49 und der trennende Gehäusesteg 40' zwischen den Schichtstoffen zu erkennen ist.

**Beispiel 4**

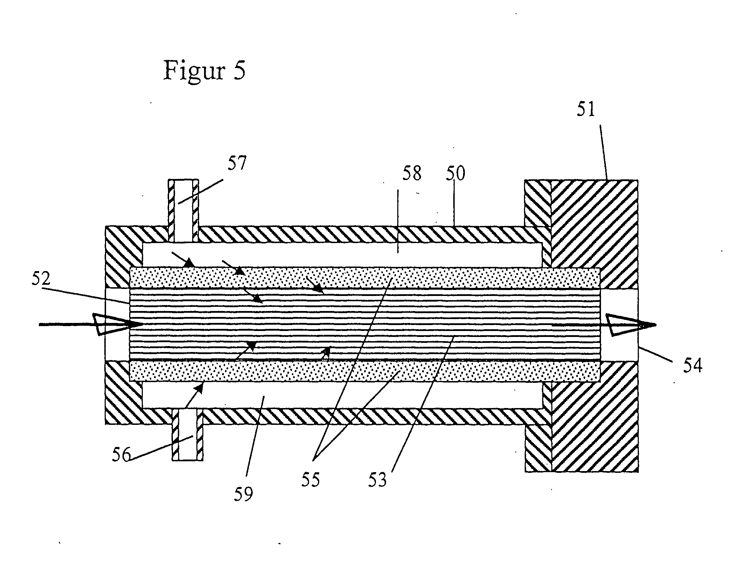

In Figur 5 ist ein Rohrreaktor dargestellt auf Basis eines Schichtstoffes, welcher ebenfalls in ein Gehäuse 50 mit Deckel 51 einsteckbar gestaltet ist. Das Gehäuse hat eine zuführende Produktöffnung 52, durch die ein flüssiger oder gasförmiger Stoff einströmen kann und in das Schichtpaket 53 eintreten kann. Der Produktaustritt aus dem Schichtpaket 53 mündet in die Gehäuseaustrittsöffnung 54. Das Schichtpaket besteht aus 12 Blechen, die wie die in Fig. 1 gezeigten Bleche strukturiert sind und alternierend angeordnet miteinander verlötet sind. Der Schichtstoff besitzt in der gezeigten Ausführung beidseitig eine poröse Deckschicht 55, die auch in einer Variante eine Membran sein kann, durch die eine weitere flüssige oder gasförmige Komponente zum durchströmenden Hauptstrom im Schichtstoff zugeführt werden kann. Die Zuleitung der gasförmigen oder flüssigen Komponente wird über die Zuleitungen 56, 57 in die Verteilerräume 58, 59 geleitet um dann die poröse Schicht zu passieren und gleichmäßig über die Länge ins Innere des Schichtstoffes zu strömen.

**Beispiel 5**

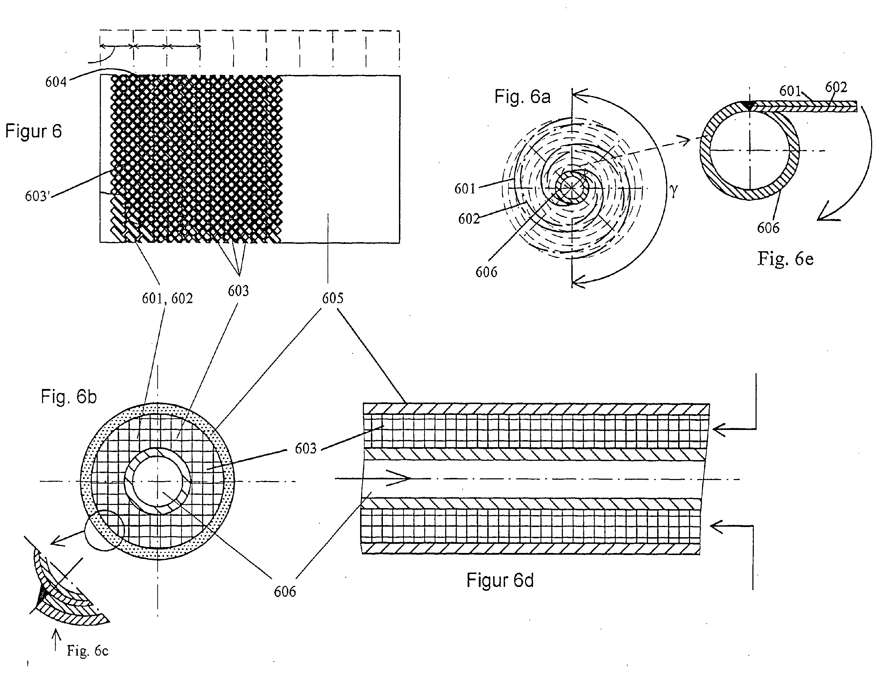

In Figur 6 wird der Aufbau einer strukturierten Schicht zur Bildung eines Rohrreaktors mit annähernd konzentrischem Querschnitt dargestellt. In Fig. 6 sind zwei strukturierte Schichten 601, 602 mit parallelen Öffnungsreihen 603 zu erkennen. Die Schichten aus Edelstahlblech haben eine geringe Dicke (0,2 mm) und können deshalb leicht gewickelt werden. Die parallelen Öffnungsreihen nehmen eine Strecke 604 ein, die einem Mehrfachen eines kreisrunden Umfangs entspricht. An den parallelen Öffnungsreihen schließt sich in seitlicher Verlängerung ein nicht strukturierter Bereich 605 an. Die zwei über einander liegenden Schichten sind aus gleichgeformten Blechen gebildet, die um 180° gewendet sind, so dass die Öffnungen in der Reihe einer Schicht sich mit Öffnungen der benachbarten Schicht überschneiden.

In Figur 6a ist schematisch das Prinzip zur Bildung eines konzentrischen Strömungsbereichs dargestellt. Werden zwei strukturierte Schichten 601, 602 an einem Rohr 606 befestigt (Detail siehe Fig. 6e), so kann das freie Ende der beiden Folien spiralförmig um das Rohr 606 gewickelt werden, bis dass sich alle Flächen der Schichten mit einander berühren, ähnlich wie eine vollständig gespannte Spiralfeder.

Es werden nach gleichem Prinzip in einer nicht gezeichneten Form auch mehrere Schichten-Paare versetzt um einen Winkel, der einen maximalen Winkelbereich γ von kleiner 180° besitzt, um einen Zylinder gewickelt.

Der nicht strukturierte Bereich 605 umschließt durch das spiralförmige Wickeln den strukturierten Bereich der Schicht in Folge vollständig, so dass das gewickelte Folienende (siehe Fig. 6c) längs zur Wicklung verschweißt werden kann, um einen druckdichten Strömungskanal zu bilden.

In Figur 6b ist der vollständig gewickelte Rohrreaktor im Querschnitt zu erkennen, der sich von innen nach außen folgendermaßen aufbaut: im Zentrum befindet sich das Rohr 606, um das Rohr 606 bildet sich durch die enge spiralförmige Wicklung der mit parallelen Öffnungenreihen 603 strukturierten Schichten 601, 602 und bildet einen konzentrischen Strömungsquerschnitt, der wiederum umgeben ist vom spiralförmig gewickelten nicht strukturierten Bereich (Deckschicht 605) der Einzelschichten 601, 602. Die Kanten der nicht strukturierten Schichten werden beispielsweise wie in Fig. 6c dargestellt am äußeren Umfang mit sich selber verschweißt.

Die Figur 6d gibt einen Abschnitt des längs zur Hauptströmungsrichtung im Längsschnitt dargestellten Rohrreaktors mit konzentrischem Strömungsquerschnitt wieder. Der Kern in Form eines Rohres 606 kann dazu genutzt werden um den Strömungsbereich mit einem durchfließenden Wärmeträgermedium zu temperieren. Um das Kernrohr herum befindet sich der konzentrische Strömungsbereich, der sich aus den spiralförmig gewickelten parallelen Öffnungsreihen 603 bildet. Der konzentrische Strömungsbereich wird durch den verschweißten nicht strukturierten Schichtenbereich 605 verschlossen, wie in Figur 6c dargestellt.

### Beispiel 6

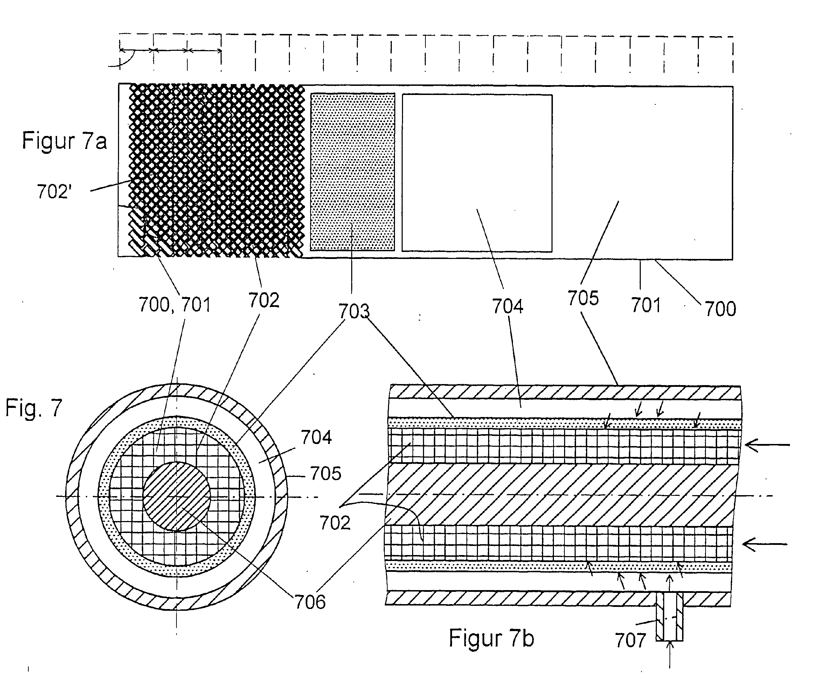

In Figur 7a werden zwei übereinander liegende Schichten (Bleche) 700, 701 gleicher Struktur dargestellt. Die Schichten sind jedoch in der Breite um ein Vielfaches einer Umfangstrecke verlängert, so dass sich in der Verlängerung zu den parallel angeordneten Öffnungsreihen 702 ein poröser Öffnungsbereich 703 anschließt. Daran grenzt ein vollständiger Öffnungsbereich 704 und in weiterer Verlängerung befindet sich ein nicht strukturierter Schichtenbereich 705. Diese Schicht zeigt beispielhaft, dass Folien oder Bleche je nach Anforderungen verschiedenartig strukturiert werden können um unterschiedliche Aufgaben zu erfüllen.

Wird, wie in Figur 7 gezeigt, eine speziell segmentweise strukturierte Schicht um einen Kernstab spiralförmig eng gewickelt, wie schon in Beispiel 5, zu Figur 6 erläutert, wird ein Rohrreaktor mit annähernd konzentrischem Verfahrensbereich gebildet. In diesem Beispiel bilden sich folgende Verfahrensbereiche aus. Die Verfahrensbereiche werden beginnend im Zentrum nach außen aufgezählt. Im Zentrum befindet sich der Kern 706, der auch ein Rohr sein kann, er wird vom konzentrischen Strömungsquerschnitt gemäss den parallelen Öffnungsreihen 702 erzeugt, um den konzentrischen Strömungsbereich bildet sich während des Wickelns ein dünner poröser Ring aus durch den speziellen Öffnungsbereich 703, daran schließt sich ein konzentrischer Hohlraum 704 gebildet aus dem flächig geöffneten Bereich 704 und der ist wiederum verschlossen durch den nicht strukturierten Bereich 705. Wird die ganze Folie vor dem Wickelprozess mit Lot beschichtet kann der spiralförmig aufgebaute Apparat druckdicht verlötete werden.

Die Figur 7b zeigt eine Längsschnitt durch den gewickelten Rohrreaktor. Eine Zuführkapillare 707 kann nachträglich angebracht werden um eine flüssige oder gasförmige Substanz in den Hohlraum 704 zu leiten, so dass sie von dort durch die poröse Schicht 703 in den konzentrischen Hauptströmungsbereich 702 gelangen kann.

### Beispiel 7

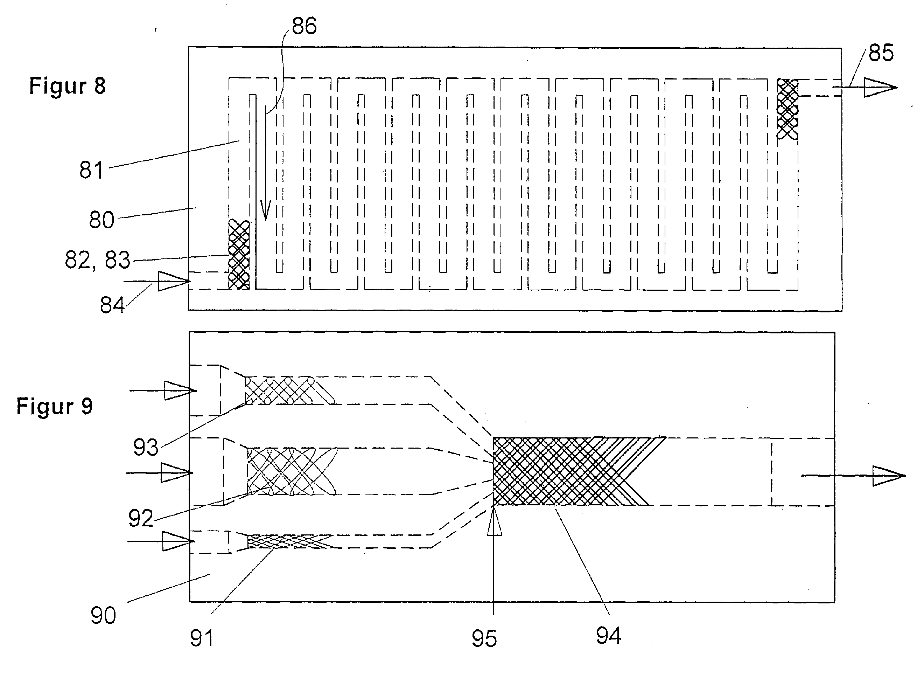

Figur 8 zeigt einen langen Rohrreaktor auf Basis eines Schichtstoffes 80, wobei die Öffnungsreihe 81 in dem großflächigen Blech schlangenförmig angeordnet ist. Zu erkennen sind das mehrere gleich strukturierte Bleche 82, 83, jeweils um 180° gewendet über einander gelegt sind, so dass sich die Öffnungen in den Reihen überschneiden und die Stege zwischen den Öffnungen unter einem Winkel stehen damit eine radiale Strömung unterstützt wird. Der lange Strömungskanal hat eine konstanten Strömungsquerschnitt und eine zuleitende 84 und ableitende Öffnung 85. Der Schichtstoff besitzt Deckschichten, die jedoch in Figur 8 nicht dargestellt sind.

## Beispiel 8

In Figur 9 wird ein Strömungskanalsystem 90 auf Basis eines Schichtstoffes dargestellt mit drei separaten Strömungskanälen 91, 92, 93, die unterschiedliche Strömungsquerschnitte besitzen und unterschiedliche Öffnungskonturen in der Öffnungsreihe haben. Die drei getrennten Kanäle ermöglichen z.B. eine Einzeltemperierung der zugeführten Einzelkomponenten bevor sie in einen gemeinsamen sammelnden Kanal 94 münden (Eintrittsstelle 95). Der sammelnde Kanal 94 kann speziell für Reaktionen ausgebildet sein. Das Strömungskanalsystem 90 ermöglicht den Beginn einer Reaktion auf erhöhtem Temperaturniveau, wobei eine Aufheizphase der beteiligten Reaktionskomponenten durch temperierte separierbare Zuführkanäle keine Einfluss auf die Reaktion nimmt.

## Beispiel 9

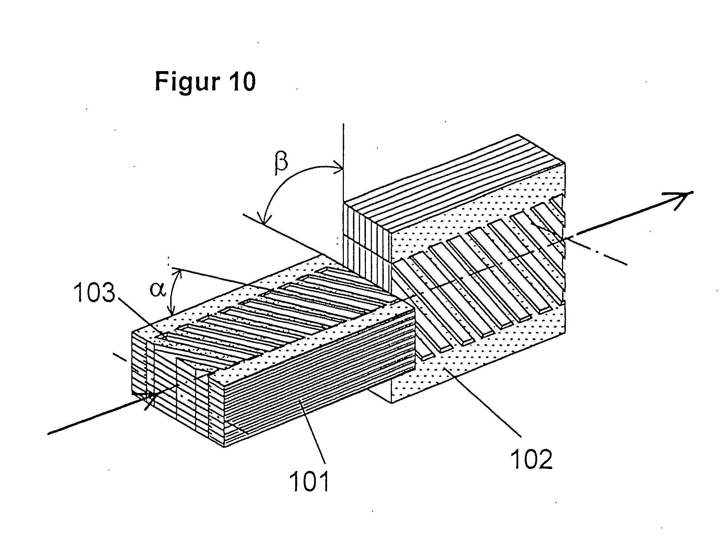

Figur 10 zeigt ein Reaktorsystem aus zwei Rohrreaktoren, bei dem zwei Schichtpakete 101, 102 mit neun strukturierten Schichten in Serie geschaltet sind. Die zwei Schichtpakete 101, 102 sind ähnlich dem in Fig. 1 gezeigten Beispiel mit einer Reihe von länglichen Öffnungen 103 versehen, die um den Winkel α zur Hauptströmungsrichtung geneigt sind. Die beiden Schichtstoffe sind um den Winkel β = 90° verdreht zueinander angeordnet. Die Schichtpakete 101, 102 werden in ein nicht gezeigtes Gehäuse eingeschoben, das die Deckschichten für die Schichtpakete bildet und für die Zuleitung und Ableitung von Prozessstoffen sorgt.

## Beispiel 10 Chemische Reaktion im Rohrreaktor

In einer miniaturisierten Versuchsapparatur, in der ein Wärmeaustauscher und ein Rohrreaktor auf Basis eines Schichtstoffes eingesetzt wurde, ist kontinuierlich eine chemische Reaktion durchgeführt worden. Die Reaktion sollte nach kurzer Reaktionszeit vollständig abgeschlossen sein ohne das sich unerwünschtes Nebenprodukt bildet. Es wurde eine homogene Flüssigphasenoxidation des organischen Sulfids Phenylthioacetonitril zum entsprechenden Sulfoxid unter Einsatz von Dimethyldioxiran (DMDO) als Oxidationsmittel untersucht. Das Hauptproblem bei einer konventionell in Batch-Fahrweise durchgeführten Reaktion ist der beträchtliche Anteil an Sulfon-Nebenprodukt, das durch Überoxidation aus dem intermediär gebildeten Sulfoxid nach Rückvermischung entsteht. Weiterhin ist zu berücksichtigen, dass DMDO ein instabiles, nicht lagerstabiles Oxidationsmittel ist und direkt vor dem Einsatz in der Oxidationsreaktion generiert werden muss.

Für diese Reaktion ergibt sich folgende Bruttoreaktionsgleichung:

$$C_6H_5\text{-}S\text{-}CH_2\text{-}CN + CH_3\text{-}CO_2\text{-}CH_3 \rightarrow C_6H_5\text{-}SO\text{-}CH_2\text{-}CN + CH_3\text{-}CO\text{-}CH_3$$

Zur kontinuierlichen Beschickung des miniaturisierten Rohrreaktors wurden in einer Vorlage 2.25 g Phenylthioacetonitril mit 1,2-Dichlorethan auf 150 ml aufgefüllt (0.1 N Lösung) bei 20°C bereitgestellt. In einem zweiten Eduktgefäß befand sich eine frisch hergestellte 0.1 N Lösung von Dimethyldioxiran in Aceton ebenfalls bei 20°C. Mit einer Doppelkolben-Pumpe (Flow 1.0 ml/min) wurde das Sulfid im Rohrreaktor (vortemperiert auf 40°C) eingefahren. Die Vortemperierung erfolgte in einem Wärmeaustauscher auf Basis eines einsteckbaren Schichtstoffes. Der Wärmeaustauscher bestand aus einem Rohrgehäuse mit Temperiermantel ähnlich wie in Figur 4 dargestellt, jedoch nur ausgestattet mit einem Schichtstoff und einem Ausgang am unteren Ende des Rohrgehäuses. Das Rohrgehäuse hatte im Zentrum entlang der Gehäuseachse nur eine rechteckige Öffnung von 6 x 6mm, in der ein strukturiertes Schichtenpaket (48), bestehend aus 30 Stck. 0,2 mm dicken Schichten (Stahlblech), eingesetzt wurde. Die Einzelschichten hatten eine Breite von 6mm und eine Länge von 99 mm. Die Öffnungen (Fig. 3) in den Schichten standen mit ihrer Längsachse 31 unter einem Winkel α von 45 Grad zur Hauptströmungsrichtung. Die geometrischen Abmessungen der Öffnungen (Fig. 3d) hatten eine Länge 31 von ca. 5,4 mm, eine Breite 32 von 0,81 mm und eine Stegbreite von 0,25 mm, so dass sich eine Öffnungsreihe aus 66 Öffnungen bildete.

Der Reaktionsapparat war ein Rohrreaktor auf Basis eines Schichtstoffes mit einer ca. 2m langen schlangenförmig angeordneten Öffnungsreihe, ähnlich dem in Fig.8 dargestellten Reaktor. Der Schichtstoff bestand aus 3 strukturierten Einzelschichten mit je einer Dicke von 0,5 mm und jeweils einer unteren und oberen Deckschicht. Alle Schichten waren untereinander vollflächig verlötet um eine gute Temperierung des Rohrreaktors zu gewährleisten. Zusätzlich war auf der oberen Deckschicht direkt eine Temperierschicht, bestehend aus einem Blech mit einem einfachen Strömungskanal für das Temperiermedium und einer weiteren Deckschicht für den Abschluss des Temperierkanals aufgelötet worden. Die untere Deckschicht hatte eine Einspeisestelle 84 für das temperierte organische Sulfid Phenylthioacetonitril, eine zweite Einspeisestelle (in Fig. 8 nicht gezeichnet) für die zweite Reaktionskomponente (DMDO), die in Strömungsrichtung ca. 100 mm versetzt nach der Zuführstelle 84 positioniert war, eine Abführleitung 85 am Ende der Öffnungsreihe des Rohrreaktors um das gewünschte Reaktionsprodukt Sulfoxid in einen Produktbehälter auffangen zu können und einige Temperaturmessstellen, die gleichmäßig über die gesamte Länge des Rohrreaktors verteilt sind. Die Öffnungen in der Lochreihe der Einzelschicht hatten folgende Abmessungen: eine Länge 31 von ca. 10 mm und eine Breite 32 von ca. 1,6 mm. Die Öffnungen standen zur Strömungsrichtung in einem Winkel $\alpha$ von 45 Grad. Zwischen den Öffnungen wurde eine Stegbreite von 0,5 mm festgelegt. Aufgrund der Öffnungsabmessungen und der Höhe des Schichtstoffes entstand ein Strömungsquerschnitt mit einem Verhältnis Breite zu Höhe B/H von ca. 5.

Die beiden Einspeisestellen, die in Strömungsrichtung im Abstand von ca. 100 mm positioniert waren, bedingten für das organische Sulfid Phenylthioacetonitril eine Verweilzeit von ca. 1.5 min, bevor das DMDO über die zweite Einspeisestelle in den Rohrreaktor gepumpt wurde, um die Reaktion zu starten. Das DMDO ist mit einer zweiten Doppelkolben-Pumpe (Flow 1.0 ml/min) ebenfalls pulsationsarm in den Rohrreaktor hineingefördert worden. Die restliche Verweilzeit des Reaktionsgemisches im Rohrreaktor betrug ca. 8 min, das entspricht einer Reaktorlänge von ca. 1.9 m. An der Austrittstelle 85 wurde das Reaktionsgemisch in einer Produktvorlage aufgefangen und für die Analyse vorbereitet.

Mit dieser Fahrweise konnte im Rohrreaktor auf Basis eines Schichtstoffes eine vollständige Oxidation des Sulfids zum Sulfoxid erreicht werden. Aufgrund des Aufbaus der strukturierten Schichten erfolgt ein rückvermischungsarmes Vermischen beim Durchströmen des Rohrreaktors, so dass während der Reaktion im Rohrreaktor keine Rückvermischung auftritt, aber die Reaktionskomponenten so gut vermischt werden, dass kein Überoxidationsnebenprodukt (Sulfon) entsteht.

### Beispiel 11

In einer Reihe von Versuchen wurde die Wärmeaustauschleistung eines Rohrreaktors auf Basis eines Schichtstoffes mit der eines vergleichbaren konventionellen Rohrwärmeaustauschers (Liebigrohr) ermittelt.

### Beschreibung der Apparate

Der Rohrreaktor auf Basis eines Schichtstoffes (ähnlich Figur 1) bestand aus einem 99 mm langen Strömungskanal, aufgebaut aus einem Schichtstoffpaket 1, 2, 3 abgeschlossen durch zwei 0,5 mm dicke Deckbleche 4, 5 die zusammen mit dem Schichtstoffpaket verschweißt wurden. Das Schichtstoffpaket bestand aus 20 Stck. 0,1 mm dicken Schichten (Stahlblech). Die Einzelschichten hatten eine Breite von 6mm und eine Länge von 99 mm. Die Öffnungen 6 in den Schichten standen mit ihrer Längsachse unter einem Winkel $\alpha$ von 45 Grad zur Hauptströmungsrichtung. Die geometrischen Abmessungen der Öffnungen (Fig. 3d) hatten eine Länge 31 von ca. 5,4 mm, eine Breite 32 von 0,81 mm und eine Stegbreite von 0,25 mm, so dass sich eine Öffnungsreihe aus 66 Öffnungen bildete. Das Schichtenpaket hatte einen Strömungskanalquerschnitt B/H von ca. 1,9. Der beschriebene Strömungskanal wurde ähnlich Figur 4 mit einem Rohr 40 $\phi$ 12 x 1,5 mm (Außendurchmesser 12 mm, Wandstärke 1,5 mm) ummantelt und mit Temperieranschlüssen 42, 43 versehen.

Der Vergleichswärmeaustauscher bestand aus einem 99 mm langen Strömungskanal (Rohr $\phi$ 4 x 0,5 mm) ohne Einbauten, der mit einem identischen Mantelrohr wie der Rohrreaktor umgeben war. Das Innenrohr war so bemessen, dass der Strömungskanalquerschnitt und die Wandstärke dem des oben genannten Rohrreaktors entsprach.

Beide Apparate bestanden aus Edelstahl.

|  |  | erfindungsgemäßer Rohrreaktor | Liebigrohr |
|---|---|---|---|
| Länge Strömungskanal | mm | 99 | 99 |
| Strömungsquerschnitt | mm$^2$ | 7,6 | 7,1 |
| Wandstärke | mm | 0,5 | 0,5 |
| Füllvolumen | ml | 0,53 | 0,7 |
| Benetzte Fläche | mm$^2$ | 4000 | 930 |

Beschreibung der Versuchsanordnung

Beide Apparate wurden unter gleichen Bedingungen getestet. Durch den Strömungskanal wurde ein Flüssigkeitsstrom mit konstanter Strömungsgeschwindigkeit (bei Wasser 0,4 m/s und bei Glycerin 0,1 m/s) und einer Temperatur von ca. 20°C bis 25°C geleitet und durch den Mantelraum mit Warmwasser (60°C und 90°C) im Gegenstrom temperiert.

Versuchsergebnisse

| Wasser (η= ca. 1 mPa s) | | | | | |
|---|---|---|---|---|---|
| | | Rohrreaktor erfindungsgemäß | | Liebigrohr | |
| Temperatur Heizmedium | °C | 60 | 90 | 60 | 90 |
| mittl. Wärmedurchgangskoeffizient | W/m$^2$/K | 6000 | 7000 | 3600 | 4500 |

| Glycerin (η= ca. 1000 mPa s bei 24°C) | | | | | |
|---|---|---|---|---|---|
| | | Rohrreaktor erfindungsgemäß | | Liebigrohr | |
| Temperatur Heizmedium | °C | 60 | 90 | 60 | 90 |
| mittl. Wärmedurchgangskoeffizient | W/m$^2$/K | 2300 | 2500 | 400 | 450 |

Ergebnisdiskussion

Der Leistungsvergleich kann am sinnvollsten anhand des mittleren Wärmedurchgangskoeffizienten (k-Wert) durchgeführt werden. Die ermittelte Verbesserung der Leistung kann zum Teil auf die Abflachung des Strömungsquerschnittes zurückgeführt werden mit dem B/H-Verhältnis von 1,9, der größere Anteil wird aber durch die Mischwirkung des Schichtstoffes bedingt. Zum einen wird durch die bessere Wärmeleitung des metallischen Schichtstoffes die Energie besser in das Flüssigkeitsvolumen hineingebracht, zum anderen bewirkt die Mischstruktur des Schichtstoffes eine erzwungene Konvektion und dadurch eine verbesserte Wärmeübertragung.

Der Leistungsunterschied wächst dabei mit steigender Viskosität des Mediums überproportional an.

**Beispiel 12** (Mischen im Rohrreaktor bei laminarer Strömung)

In einem Versuch wurde die Mischwirkung bei laminarer Strömung im Rohrreaktor auf Basis eines ähnlich dem in Figur 10, rechts gezeigten Schichtpaket zusammengesetzten Schichtpaketes mit einem Wärmetauscher aus dem Stand der Technik verglichen. Hierfür wurde ein ca. 100 mm langer Rohrreaktor bestehend aus 20 Stck perforierten Schichten (Stahlblech) in ein transparentes Polycarbonatgehäuse eingebaut. Die Öffnungen in den Schichten mit einer Geometrie, wie in Figur 3d dargestellt, waren in ihren Abmessungen gleich. Die gewählten Abmessungen betrugen: Länge = 5mm, Breite = 0,8 mm und die Stegbreite zwischen den Öffnungen 0,25 mm.

Der mischende Strömungsquerschnitt bildete sind aus 20 Stück übereinander geschichteten 0,2 mm dicken Blechen, so dass sich immer ein Strömungsquerschnitt von ca. 4 x 4 mm ergab. Der zu- und abführende Kanal im Polycarbonatgehäuse hatte einen quadratischen Querschnitt von 6 x 6 mm.

Die nach der Lehre der Patentanmeldung WO 98/55812 nachgebaute Schichtenstruktur wurde so hergestellt, dass in vier Reihen nebeneinander 19 hintereinander liegende Öffnungen in einer Schicht eingearbeitet wurden und somit jede Einzelschicht 76 Öffnungen hatte. Die nebeneinander liegenden Öffnungen waren in ihrer Längsachse parallel zur Hauptströmungsrichtung ausgedehnt. Die Öffnung (Langloch) einer Schicht überlappte jeweils maximal nur mit zwei Öffnungen einer jeweils benachbarten Schicht. Durch die Überlappung der übereinander liegender Öffnungen wurden vier durchgängige Strömungskanäle gebildet. Um eine Durchmischung über den gesamten Strömungsquerschnitt (vier Öffnungen nebeneinander) zu ermöglichen, wurden die vier parallel nebeneinander liegenden Öffnungen jeweils durch eine Aussparung (0,25 mm breit und 0,1 mm hoch) in den 0,25 mm breiten Trennstegen miteinander verbunden.

Die Einzelschicht des erfindungsgemäßen Reaktors ( wie in Figur 10 rechts dargestellt) hatte 66 Öffnungen, die in ihrer Längsausdehnung zur Hauptströmungsrichtung unter dem Winkel α von 45 Grad standen. Die Einzelschichten waren gleichartig ausgebildet und nur gegenüber den Nachbarschichten in ihrer Längsachse jeweils um 180 Grad gewendet und aufeinander gelegt angeordnet.

**Versuchsdurchführung:**

Als Mischaufgabe im Rohrreaktor sollten zwei unterschiedlich grosse Volumenströme homogen vermischt werden. Als Substanz wurde Silikonöl mit einer Viskosität von 10 Pa.s gewählt. Der erste Volumenstrom war transparent und der zweite Volumenstrom war schwarz eingefärbt, so dass eine einfache optische Beurteilung durch das transparente Kunststoffgehäuse hinsichtlich der Mischleistung der Schichtstoffe möglich war. Der Gesamtmassenstrom betrug ca. 1,4 g/Min. und es stellte sich ein Druckverlust von ca. 3,2 bar ein.

**Ergebnis:**

Der Wärmetauscher nach Patentanmeldung WO 98/55812 zeigte in Schichtebene keine, und in Stapelebene nur eine geringe Mischwirkung. Es wurde deutlich beobachtet, dass die perforierten Schichten mit parallel angeordneten Öffnungen vier Einzelkanäle bilden und die Einzelkanäle untereinander keine Vermischung zeigen, obwohl seitliche Verbindungskanäle zwischen den Einzelkanälen vorhanden sind.

Beim erfindungsgemäßen Reaktor hingegen konnte in Schichtebene eine totale und in Stapelebene eine gute Durchmischung festgestellt werden, obwohl die Anzahl der Öffnungen in der Einzelschicht wesentlich geringer waren als beim Vergleichsobjekt.

**Diskussion:**

Im Vergleich zum Wärmetauscher nach dem Stand der Technik (WO 98/55812) ist bei dem erfindungsgemäßen Rohrreaktor eine Einkanalströmung realisiert. Stoff-Verteilungsprobleme bei unterschiedlich grossen Substanzströmen, bei ungleichmäßigem Durchsatz, bei unterschiedlicher Dichte und Viskosität treten nicht auf, es erfolgt immer eine schnelle und gute Durchmischung, was die Leistungsfähigkeit und die Funktion des Reaktors und insbesondere auch den Stoffaustausch wesentlich erhöht.

Ausschlaggebend für hohe Leistungsfähigkeit des Reaktors sind die im Strömungsbereich befindlichen Öffnungen, die unter einem Winkel $\alpha$ stehen, und mit ihren Wandungen eine Querströmung verursachen.

Der Wärmetauscher nach WO 98/55812 ist aufgrund seiner fehlenden Mischwirkung als Reaktor nicht einsetzbar.

**Patentansprüche**

1.    Rohrreaktor auf Basis eines Schichtstoffes, wenigstens bestehend aus mindestens drei strukturierten Schichten (1, 2, 3) und je einer Deckschicht (4, 5) auf der Oberseite und Unterseite des Schichtstoffes, bei dem jede strukturierte Schicht (1, 2, 3) eine Vielzahl in einer oder mehr Längsreihen angeordneter Öffnungen (6, 7) aufweist, die insbesondere in Querrichtung zu den Längsreihen weiter ausgedehnt sind, **dadurch gekennzeichnet, dass** sich die Öffnungen (6, 6') einer mittleren Schicht (1) mit mindestens drei Öffnungen (7, 7') einer jeweils benachbarten Schicht (2) bzw. (3) überschneiden, und dass die Folgen von sich überschneidenden Öffnungen (6, 6'; 7, 7') einen Kanal (13) in Längsrichtung oder in Querrichtung der Schichten (1; 2) bilden.

2.    Rohrreaktor nach Anspruch 1, **dadurch gekennzeichnet, dass** die Öffnungen (6, 6'; 7, 7') in den strukturierten Schichten (1; 2) periodisch wiederkehrend angeordnet sind.

3.    Rohrreaktor nach Anspruch 1 oder 2, **dadurch gekennzeichnet, dass** durch die Reihen von mit einander verbundenen Öffnungen (6, 6'; 7, 7') ein rückvermischungsarmer Kanal in Längsrichtung der Schichten (1; 2; 3) gebildet wird, der für ein durch die Schichten strömendes Fluid die Hauptströmungsrichtung bildet.

4.    Rohrreaktor nach einem der Ansprüche 1 bis 3, **dadurch gekennzeichnet, dass** die Öffnungen (6, 6'; 7, 7') eine längliche geometrische Form haben, insbesondere als Langlöcher ausgebildet sind und die Längsachse der Hauptausdehnung der Öffnungen (6, 6'; 7, 7') unter einem Winkel $\alpha$ zur Hauptströmungsrichtung steht, der von 5° bis 85° beträgt, bevorzugt von 30° bis 60°.

5.    Reaktor nach einem der Ansprüche 1 bis 4, **dadurch gekennzeichnet, dass** die Öffnungen (6, 6') bzw. (7, 7') in den strukturierten Schichten (1), (2) so gestaffelt angeordnet sind, dass jeweils benachbarte Öffnungen (6,6') in Längsrichtung der Öffnungsreihe gesehen wenigstens mit einem Teil ihrer Ausdehnung nebeneinander angeordnet sind.

6.    Rohrreaktor nach einem der Ansprüche 1 bis 5, **dadurch gekennzeichnet, dass** die Öffnungen (6, 6'; 7, 7') in den strukturierten Schichten (1, 2,3) einen Rechteck- oder Ellipsenförmigen Querschnitt haben.

7.    Rohrreaktor nach einem der Ansprüche 1 bis 6, **dadurch gekennzeichnet, dass** benachbarte Schichten (1, 2, 3) ein Überschneidungsverhältnis der Öffnungen (6,6'; 7,7') von größer 1,5 bis 10, besonders bevorzugt von 2,5 bis 7,5 aufweisen.

8.  Rohrreaktor nach einem der Ansprüche 1 bis 7, **dadurch gekennzeichnet, dass** die innere Wand der Öffnungen (6, 6', 7, 7') zickzackförmig ausgestaltet ist.

9.  Rohrreaktor nach einem der Ansprüche 1 bis 8, **dadurch gekennzeichnet, dass** die Zahl der Öffnungen (6, 6'; 7, 7') in einer strukturierten Schicht mindestens 50, bevorzugt mindestens 200, besonders bevorzugt mindestens 500 beträgt.

10. Rohrreaktor nach einem der Ansprüche 1 bis 9, **dadurch gekennzeichnet, dass** der Strömungskanal mit einem L/D- Verhältnis größer 10, bevorzugt größer 100 und besonders bevorzugt größer 500 ausgebildet ist.

11. Rohrreaktor nach einem der Ansprüche 1 bis 10, **dadurch gekennzeichnet, dass** der Reaktor zwei oder mehr Schichtstoffe mit mindestens drei strukturierten Schichten aufweist, wobei die Schichtstoffe in Reihe hintereinander angeordnet sind und die Schichten in Strömungsrichtung um einen Winkel β von 30 bis 90° zueinander verdreht angeordnet sind.

12. Rohrreaktor nach einem der Ansprüche 1 bis 11, **dadurch gekennzeichnet, dass** die Schichten (1; 2; 3) aus einem Werkstoff ausgewählt aus der Reihe Metall, insbesondere Aluminium oder Stahl, Kunststoff, Glas oder Keramik gebildet sind.

13. Rohrreaktor nach einem der Ansprüche 1 bis 12, **dadurch gekennzeichnet, dass** die strukturierten Schichten (1; 2; 3) und/oder die Deckschichten an ihren produktberührten Innenflächen mit einem Katalysator beschichtet sind oder vollständig aus einem Katalysatormaterial bestehen.

14. Rohrreaktor nach einem der Ansprüche 1 bis 13, **dadurch gekennzeichnet, dass** die strukturierten Schichten (1; 2; 3) als Paket ausgebildet sind, das in ein Gehäuse einschiebbar ist, wobei das Gehäuse die Deckschichten (4, 5) für den Schichtstoff bilden.

15. Rohrreaktor nach einem der Ansprüche 1 bis 14, **dadurch gekennzeichnet, dass** die obere und untere Deckschicht (4, 5) unabhängig voneinander wenigstens teilweise als Stoffaustauschmembranen ausgebildet sind.

16. Rohrreaktor nach einem der Ansprüche 1 bis 15, **dadurch gekennzeichnet, dass** der Kanal im Querschnitt gesehen ein Verhältnis von Breite zur Höhe >1, bevorzugt > 2,5 und besonders bevorzugt >5 aufweist.

17. Rohrreaktor nach einem der Ansprüche 1 bis 16, **dadurch gekennzeichnet, dass** die aufeinander folgenden Schichtstoffe in Strömungsrichtung gesehen mit unterschiedlich großem hydraulischem Strömungsquerschnitt ausgebildet sind.

18. Rohrreaktor nach einem der Ansprüche 1 bis 17, **dadurch gekennzeichnet, dass** der Reaktor einen in der Ebene der strukturierten Schichten (1; 2; 3) schlangenförmig verlaufenden Kanal (86) aufweist.

19. Rohrreaktor nach einem der Ansprüche 1 bis 18, **dadurch gekennzeichnet, dass** der Reaktor mindestens eine Verzweigungsstelle (95) aufweist, an der zwei Einzelkanäle mit einem Hauptströmungskanal verbunden sind.

20. Rohrreaktor auf Basis eines Schichtstoffes bestehend aus wenigstens zwei strukturierten Schichten (601, 602), die um ein Kernrohr oder -stab (606) gewickelt angeordnet sind, wobei jede Schicht (601, 602) eine Vielzahl in einer oder mehrerer Längsreihen angeordneter Öffnungen (603, 603') aufweist, die insbesondere in Querrichtung zu den Reihen ausgedehnt sind, und einer Deckschicht (605), die auf dem äußeren Umfang des Schichtstoffes angeordnet ist, und bei der sich die Öffnungen (603) einer Schicht (601) mit den Öffnungen (603') der jeweils angrenzenden Schicht (602) überschneiden, wobei die Folgen von sich überschneidenden Öffnungen Kanäle in Längsrichtung des Kernrohres oder -stabes (606) ausbilden.

21. Rohrreaktor nach Anspruch 20, **dadurch gekennzeichnet, dass** dieser eine wenigstens teilweise poröse Deckschicht (703) und einen die Deckschicht (703) umschließenden annähernd konzentrischen Verteilungsraum (704) mit Zuleitung /707) aufweist.

**22.** Rohrreaktor nach Anspruch 20 oder 21, **dadurch gekennzeichnet, dass** die Innenflächen des Reaktors eine katalytische Beschichtung aufweisen oder die strukturierten Schichten aus Katalysatormaterial bestehen.

**23.** Verwendung eines Reaktors nach einem der Ansprüche 1 bis 22 zur Durchführung chemischer Reaktionen und in der Stoffaustauschtechnik, insbesondere als Kolonnenpackung, in der Extraktion und der thermischen Trenntechnik.

**24.** Verwendung eines Reaktors nach einem der Ansprüche 19 bis 21 als Katalysatorpackung für die Abgastechnik, die Synthesetechnik oder die Kraftfahrzeugtechnik.

**Figur 1**

**Figur 1b**

**Figur 1a**

EP 1 284 159 A2

# Figur 2

Figur 3

Figur 3a

Figur 3b

Figur 3c

Figur 3d

Figur 3e

Figur 3f

Figur 3g

Figur 3 h

Figur 3i

α

α

α1

α1

α1

33

34

34'

35

31

32

31

32

32

31

31

32

36

32

31

37

EP 1 284 159 A2

Figur 4

Figur 4a

46 47
45
42
40
41
A A
48
49
44
40'
H
B
49 48 40
43

EP 1 284 159 A2

Figur 5

EP 1 284 159 A2

Figur 6

604

603'

601, 602    603    605

Fig. 6b

603

606

Fig. 6c

Fig. 6a

601
602

606

601    602

606

Fig. 6e

Figur 6d

EP 1 284 159 A2

Figur 7a

702'

700, 701    702    703    704    705    701    700

Fig. 7

704

705

702

706

Figur 7b    707

EP 1 284 159 A2

Figur 8

86

85

81

80

82, 83

84

Figur 9

93

92

90

91

95

94

EP 1 284 159 A2

EP 1 284 159 A2

## Figur 10